# EUROPEAN PATENT SPECIFICATION

(11) **EP 2 700 838 B1**
(45) Date of publication and mention of the grant of the patent: **01.07.2015**
(21) Application number: 12006058.7
(22) Date of filing: 24.08.2012
(51) Int. Cl.: F16F 7/01, E01B 3/46, E01B 19/00

(54) **Sleeper with damping element based on dissipative bulk or granular technology**
Schwelle mit Dämpfungselement basierend auf dissipativer Masse oder granularer Technologie
Traverse avec élément d'amortissement sur la base de la technologie granulaire en vrac ou dissipative

(43) Date of publication of application: 26.02.2014
(73) Proprietor: Emri, Igor, 1125 Ljubljana (SI); Von Bernstorff, Bernd-Steffen, 67157 Wachenheim (DE); Brehmer, Frank, 44229 Dortmund (DE); Kalamar, Andrej, 1000 Ljubljana (SI)
(72) Inventor: Emri, Igor, 1125 Ljubljana (SI); Von Bernstorff, Bernd-Steffen, 67157 Wachenheim (DE); Brehmer, Frank, 44229 Dortmund (DE); Kalamar, Andrej, 1000 Ljubljana (SI); Bek, Marko, 1000 Ljubljana (SI); Oblak, Pavel, 1360 Vrhnika (SI)
(74) Representative: Hörschler, Wolfram Johannes

(56) References cited:
- DE-A1- 2 935 149
- DE-A1- 2 951 272
- US-A1- 2007 012 530

## Description

The invention relates to a sleeper including a damping element for absorbing mechanical excitations. The invention further relates to a railway system comprising at least one sleeper including at least one damping element and at least one rail fastened on the at least one sleeper.

Damping elements are generally used to damp mechanical excitations by absorbing mechanical energy impacting on a structure. Applications of such damping elements include, for instance, supports for industrial machines to damp vibrations, fundaments in building construction to reduce susceptibility to earthquake damage and resonance as well as trains and railway tracks to reduce vibrations during travel.

Particularly in railway construction, the use of damping elements for damping vibrations reduces noise exposure. Typically, wooden or concrete sleepers are bedded on gravel as shock or vibration absorption material. Furthermore, railway tracks usually include elastic elements such as elastomers, metal elements, metallic springs and pneumatic or hydraulic systems to damp vibrations. Such shock vibration elements may be included into the sleeper by embedding a fluid, powder and/or granulate as described in DE 29 35 149 A1. Here the railway sleeper comprises a body moulded of an elastic material, such as a hard rubber or a synthetic resin. The body provides one or more hollow parts under a rail fitting position, where at least one of a fluid, a powdery material and a granular material is embedded to reduce noises and vibrations.

CN 102 251 457 A discloses a sleeper bolting elastic road junction, mainly comprising a rubber pavement panel, a road junction prestressed concrete sleeper, connecting screws, a C type boltless fastener and a bumper pad under rail. Here Nylon cannulas are pre-embedded on the concrete sleeper and the concrete sleeper is paved on a railway roadbed. Furthermore, a bumper pad is arranged between the rails and the concrete sleeper and the external sides of the two rails or tracks are paved with panels respectively. The complementing bumper pad under the rail is further arranged under an iron subplate for vibration damping and noise reduction.

With the continuous development of high-speed trains nowadays reaching velocities up to 450 km/h, the tracks have to fulfill special requirements. In particular, the damping elements are exposed to a high level of stress when damping mechanical vibrations and effects like noise generation, heat generation, durability and efficiency of the construction need to be optimized.

Damping elements known in the art have the disadvantage that they utilize materials in a state where they are time- and/or frequency-independent. In the rubbery equilibrium state for example energy absorption is far away from its potential maximum. Frequency characteristics of such damping elements known in the art depend on the construction and are only effective within a small frequency range. Therefore, good performance cannot be provided over a wide frequency range. However, especially rail tracks, which are used by trains of different types and speeds, have to facilitate either an adjustable damping performance or perform over a wider frequency range. At the same time properties like dimensional stability and durability remain prerequisites.

### Description of the invention

It is an object of the invention to provide a type of damping element that allows for substantially increased energy absorption within a wide frequency range. It is a further object of the invention to provide a damping element that is independent of any constructive restrictions such as the shape of the damping element and is flexible in its application. Further objects of the invention include dimensional stability even under high loads as well as durability.

According to the invention a sleeper is proposed, which includes at least one damping element for absorbing mechanical excitations, wherein the at least one damping element is embedded into at least one recess of the sleeper, characterized in that the at least one damping element comprises a container encapsulating a viscoelastic material, wherein the container is pressurized to a pressure level, at which the damping element's frequency and/or rate for absorbing a maximum energy substantially matches a frequency and/or rate of the mechanical excitation.

In the present context a viscoelastic material exhibits viscoelastic properties, where viscous and elastic characteristics play a role when undergoing deformation. Viscoelastic materials exhibit strong time, temperature, pressure, and rate or frequency dependence.

In the sense of the present application the pressure level inside the container is determined by the amount of viscoelastic material embedded inside the container and/or a mechanical load permanently applied to the damping element. Hence, the pressurization is realized by filling the container with viscoelastic material up to a certain level and/or applying a certain level of force to the container via a mechanical load. In this context the level corresponds to the pressure level, at which the damping element's frequency for absorbing a maximum energy substantially matches a frequency of the mechanical excitation. Substantially matching in this context refers to two at least partially overlapping frequency ranges. Hence, the frequency, at which the damping element absorbs the maximum energy, is included in the frequency range of the mechanical excitation.

The viscoelastic material may be a bulk material exhibiting viscoelastic properties and/or a granular material. In this context a granular material is a conglomeration of discrete solids, macroscopic particles or grains, of different sizes. In the case of a granular material the particles or grains exhibit sizes of at least 1 µm up to 1 cm, preferably 10 µm to 5 mm, and particularly preferably 10 µm to 3 mm. Furthermore, the size distribution of particles or grains of the granular material should be sufficiently broad or be a multimodal size distribution.

Furthermore, mechanical excitations in the context of the invention refer to static, continuous, periodic and/or impulse loads impacting on a structure. With respect to the damping element's properties its energy absorption spectrum characterizes which mechanical excitations are damped by the damping element (response function). This may depend on the amplitude, rate and/or frequency of the excitation and whether it is a static, continuous, periodic and/or impulse load.

The sleeper including the damping element according to the present invention allows for damping mechanical excitations by optimally adjusting the damping element to the external conditions under which the mechanical excitations occur. In particular, the pressurization of the viscoelastic material in the container results in a type of gas/liquid like behavior of the damping element, which allows to optimally adjust the damping properties to the frequency and/or the amplitude of the impinging excitations stemming from trains running on a track. Thus, the sleeper according to the invention facilitates to effectively damp excitations occurring in a railway structure with sleepers keeping the rails in place.

In one embodiment of the invention the container is pressure-sealed. Furthermore the container may be deformable. Preferably, the container is made of a time-independent material. Suitable materials are concrete, reinforced concrete, stone, natural rock, metal, such as steel or aluminum, a fiber-based material, such as fabric from woven, knitted or winded glass-, basalt- and/or carbon fibers, or fiber-reinforced composite with aforementioned fiber-based material being embedded in a fiber-reinforced resin to form a composite. The container encapsulating said viscoelastic material is preferably designed to allow transmission of exciting mechanical loads to the viscoelastic material. In particular, the material used for the container is time-independent in order to maintain the high pressure over the damping element lifetime.

In another embodiment of the present invention, the pressure inside the container lies between 0.1 and 1000 MPa preferably between 0.5 to 300 MPa, and particularly preferably between 20 to 100 MPa. Owing to the viscoelastic properties of the filling material, the pressure within the container determines the response function of the damping element. Thus, a high pressure inside the container promotes the damping at low excitation frequencies, whereas a lower pressure allows for absorbing excitations with high frequencies. Hence the energy absorption of the damping element may be adjusted to the local velocity of the train along the track.

The size of the container and the amount of damping material used in a particular application depends on the magnitude of the applied stress and the amount of the mechanical energy to be dissipated. Typically the size of a damping element in railway structures is limited by the size of a sleeper and optionally the rail.

In a preferred embodiment of the invention, the viscoelastic material is made of a time-dependent material, i.e. a material that itself exhibits viscoelastic properties. In particular, a viscoelastic bulk and/or granular material is made of a time-dependent material, i.e., a material that itself exhibits viscoelastic properties. Such material may comprise rubber and/or thermoplastics, in particular Thermoplastic Polyurethane (TPU), Styrene Butadiene Rubber (SBR), Natural Rubber (NR), Polyurethane (PU), Polyethylene (PE), Polypropylene (PP), Polyvinylchloride (PVC), Polyamide (PA), Polyoxymethylene

(POM), Polycarbonate (PC), Polybutyleneterephthalate (PBT), Polyethyleneterephthalate (PET) and composition or blends thereof.

Owing to the pressurization of said damping element, its damping characteristics are adjusted. The damping characteristics in this sense include the amplitude and/or frequency of a response function of the damping element, which characterizes the mechanical excitations damped by the damping element. Thus, the frequency and/or rate, at which said damping element absorbs a maximum energy, may be matched with a frequency and/or rate of the mechanical excitation determined at the position, where the sleeper is to be installed. The excitation and the damped response is for example detected and measured by commercially used equipment for measuring forces, displacements, velocities, accelerations and frequencies, such as load cells, strain gauges, accelerometers, and optical devices.

In a preferred embodiment the damping element is covered by a plate to uniformly distribute the load of the mechanical excitation to be damped. The plate may be made of metal, such as ferritic steel or austenitic steel, covering the part of the damping element that is not limited by the recess. In a particularly preferred embodiment, the recess has at least one open side, which is covered by the plate. The dimensions of the plate are preferably chosen such that a uniform distribution of the load to the damping element is achieved. The width to thickness ration of the plate may for instance be chosen in a range of 10 mm to 60 mm, preferably 20 mm to 30 mm. Typical dimensions in railway applications may be 300 mm width and 10 mm thickness.

For producing the sleeper including the damping element in a cost-effective and environmentally friendly manner, the viscoelastic material is preferably recycled rubber. In a preferred embodiment the container is made of basalt fiber.

To achieve optimal damping properties between the sleeper and the rail, the damping element may exhibit a sock-like shape, wherein at least one damping elements are embedded in the recess of the sleeper. In a further preferred embodiment, the damping element is embedded in an armament of said sleeper.

The invention further includes a railway structure including at least one sleeper according as described above. In particular the sleeper supports at least one rail. In such a railway structure the damping element is typically positioned underneath said rail supported by the sleeper. Here, the proposed sleeper for damping mechanical excitations may be used to damp vibrations of a train travelling on a railway track. Preferably, the railway structure includes two rails forming a rail track for trains and a number of sleepers spaced equidistance. Here, each sleeper includes two recesses with damping elements, which are embedded underneath the supported rails.

Furthermore, the damping element may be embedded in an armament of the sleeper. In a particularly preferred and environmental friendly embodiment of the invention, the viscoelastic material is made of recycled rubber.

Above described sleeper with damping element is particularly simple and cost effective in its production and at the same time capable of a wide variety of applications. In applications such as rail way structures the damping element can simply be integrated into such a system. Additionally, by optimally damping vibrations of travelling trains the proposed damping element increases comfort for passengers and decreases wear of rail carriage or wagon parts, such as shock absorbers. The damping elements also decrease propagation of vibrations throughout the fundament and soil to the surrounding objects, i.e., buildings adjacent to railway tracks and subway lines.

### Brief description of the drawings

Further features, embodiments, and advantages of the present invention will become apparent from the following detailed description, which is provided by way of example only, with reference to the drawings, wherein:
- Figure 1: is a schematic illustration of a wheel-rail contact generating vibrations;
- Figure 2: is a schematic illustration of a damping element filled with granular material for use in one or more embodiments of the present invention;
- Figure 3: is an exemplary diagram illustrating the principle of reducing vibrations by matching the frequency, at which the bulk or granular material inside the damping element exhibits maximal damping properties with the frequency of the mechanical excitation,
- Figure 4: is an illustrated example of a dissipative sleeper system in a perspective view;
- Figures 5.1 to 5.3: are top, front and side views of the dissipative sleeper system of Figure 4;
- Figures 6.1 to 6.3: are sectional views of the dissipative sleeper system of Figure 4;
- Figures 7.1,: is a schematic illustration of a damping element including bore-holes for a fixation structure;and 7.2
- Figure 8: is an exploded view of the section through the dissipative sleeper system according to Figure 4;
- Figure 9: is an exemplary illustration of a sleeper including two sock-like damping elements embedded in a recess;
- Figure 9.1 to 9.3: are sectional views of the dissipative sleeper system shown in Figure 9;
- Figure 10.1 to 10.5: are different views on the deformation characteristics of the sleeper system.

### Detailed description

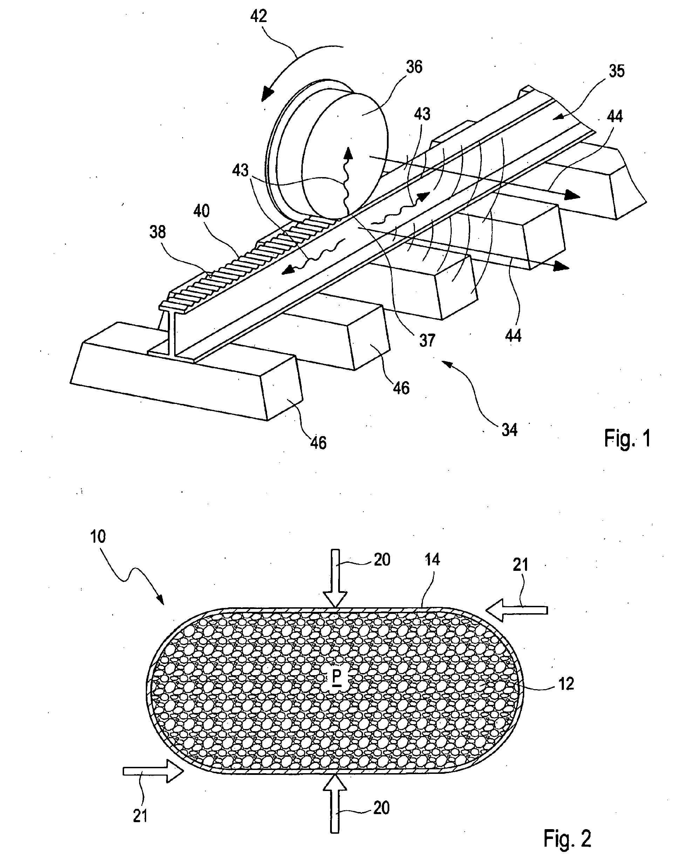

In Figure 1 schematic illustration of vibrations produced in a rail system 34 including a rail 35 is depicted.

Here, a wheel 36 of e.g. a locomotive or a passenger cabin of a train moves on the rail surface 38 in rotation direction 42, where the wheel 36 is in contact 37 with the rail surface 38. The rail surface 38 exhibits a surface roughness 40, which induces vertical vibrations 43 into the moving system of train and rails. This may produce uncomfortable shocks to the passengers of the train and generates noise transmitting vibrations in different transmission directions 44. The vibrations caused by the surface roughness of the rail surface 38 are transmitted via sleeper 46 to the ground and surroundings. The goal of the present invention is to absorb the exciting mechanical energy and minimize the vibrations generated at the wheel-rail contact 37.

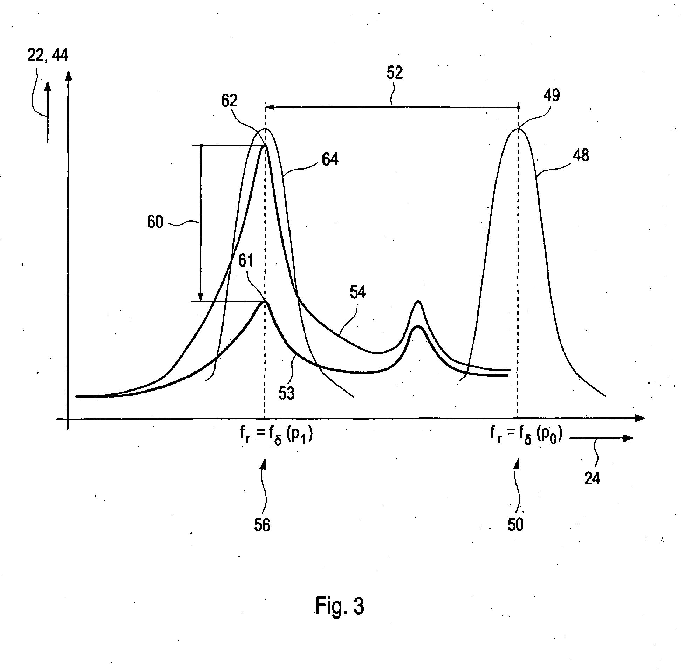

In order to achieve this goal, the structural solution of the proposed dissipative sleeper system is based on pressurizing a viscoelastic material 12 inside a container 14. This way, the damping properties may be adjusted through pressurization in order to match the frequency of the mechanical excitation 43 and thus, optimally absorb the energy of the mechanical excitation, as will be explained in more detail in Figure 3.

Figure 2 depicts a schematic illustration of a damping element 10 forming one of the core parts of the dissipative sleeper system. The damping element 10 comprises a container 14 filled with bulk and/or granular material 12. In this embodiment, the container 14 has cylindrical shape and is typically made of concrete, reinforced concrete, stones, natural rocks, metal (such as steel or aluminum), or other material, such as fabric from woven, knitted or winded glass-, basalt- and/or carbon fibers. If required, fabric may be embedded in a fiber-reinforced resin to form a composite. Material used for containers 14 should be time-independent to maintain the high pressure over the damping element's 10 lifetime.

A container 14 made of metal provides a dimensionally stable housing for a railway sleeper 46, which may be integrated into the stiff structure of a sleeper 46. Furthermore, it is simple to provide for a pressure sealed container 14 when utilizing a metal. However, fibers are very flexible in their application and provide e.g. in the form of fiber-reinforced composites a light, but stable and pressure sealed container 14.

In order to enable the granular and/or bulk material 12 encapsulated in the container 14 to optimally absorb mechanical excitation energy, the pressure p inside the container 14 is adapted through an external source of pressure (not shown). The pressure source may for instance include pumping means, valves and some cylinder piston like system (not shown) to press the bulk and/or granular material 12 into the container 14. Alternatively, the pressure source may be simply a permanently applied mechanical loading to achieve the required internal pressure within the container 14. In the context of the present invention, the pressure p within the container 14 is typically adjusted to exceed ambient pressure p_{ambient} of usually about 1 atmosphere (or equivalently about 100 kPa). The pressure p within the container 14 can, depending on the application of the damping element 10, amount to a pressure p between 0.1 and 1000 MPa.

Furthermore, the container 14 encapsulates a viscoelastic bulk and/or granular material 12. Here the granular material 12 can comprise one type of granulate or a mix of different granulates depending on the application of the damping element 10. Examples of viscoelastic granular material are rubber or thermoplasts like Thermoplastic Polyurethane (TPU), Styrene Butadiene Rubber (SBR), Natural Rubber (NR), Polyurethane (PU), Polyethylene (PE), Polypropylene (PP), Polyvinylchloride (PVC), Polyamide (PA), Polyoxymethylene (POM), Polycarbonate (PC), Polybutyleneterephthalate (PBT), Polyethyleneterephthalate (PET) and composition or blends thereof.

Figure 3 schematically illustrates the reduction of vibrations 54 by matching the mean frequency f_{δ}(p₀) (50), at which the damping element 10 exhibits maximal damping properties 48 in unpressurized state, i.e., at pressure p=p₀, with the mean frequency fᵣ (56) of the mechanical excitation with an amplitude 62.

By pressurizing the proposed damping element 10, the response function 22, 44 with center frequency f_{δ}(p₀) 50 shifts, as indicated by the arrow 52, from the frequency level 50 towards the lower frequency level fᵣ =f_{δ}(p₁) 56, such that the damping peak 49 coincides with the peak 62 in the frequency distribution of the mechanical vibration 54. Thus, the damping properties 48 of the damping element 10 are adjusted to become 64 and optimally damp the exciting mechanical energy with frequency distribution 54. This results in a damped distribution for the mechanical energy 53. Therefore the peak 62 is reduced to 61 by an amount 60, as illustrated in Figure 3.

As a result, the pressure p inside the container 10 influences the damping properties of the damping element 10 including a container 14 encapsulating viscoelastic granular material 12. Hence, the damping properties of the damping element 10 can be controlled by adjusting the pressure p, such that the exciting vibration is optimally damped.

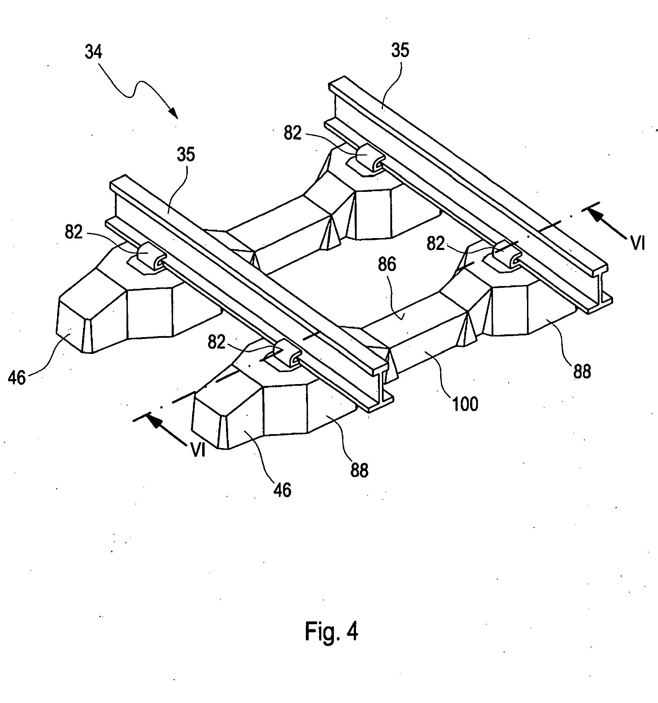

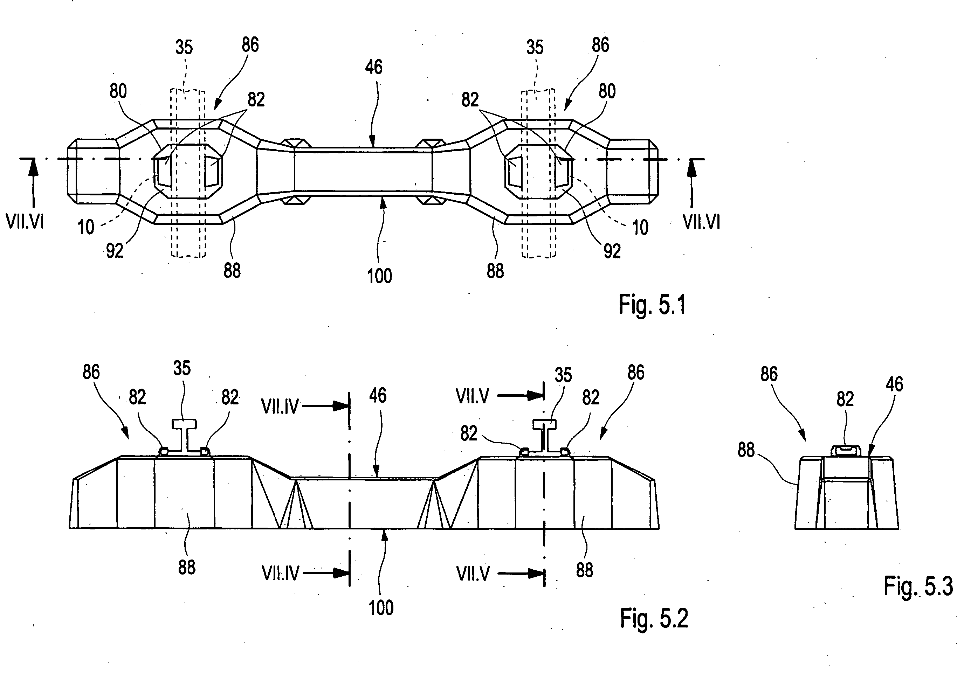

Figure 4 shows one exemplary embodiment of the proposed sleeper 46 in a railway track system 34. For vibration reduction the sleeper 46 includes the damping element 10 as described above. In particular, Figure 4 shows a dissipative sleeper system 46 in perspective view comprising a rail 35 positioned on sleeper 46. Further views of the dissipative sleeper system 46 are shown in Fig. 5.1 to 5.3.

In order to withstand dynamical loads of trains running on the rail tracks 35, sleepers 46 are usually made of concrete. Typically the rail tracks 35 are fixed to the sleepers 46 through rail fasteners 82. The sleeper 46 according to the present invention further includes a recess 80, which is located underneath the rail tracks 35. In the recess, the damping element 10 comprising viscoelastic material 12 encapsulated in container 14 is embedded. A steel cover 92 between the damping element 10 and the rail 35 provides further protection to the damping element 10.

In a preferred arrangement, the recess 80 and the damping element 10 are positioned under the rail 35 and the rail 35 is fastened by a rail fastener 82, which fastens the rail 35 through e.g. a clamp-connection, a bolt-connection or any other connection means known in the art. Typical connection means are based on force closure or form closure.

With respect to the rail (tracks) 35 positioned on the sleeper 46 with damping element 10, the main principle is based on the rail (track) being supported by the damping element 10 only. As the damping element 10 is deformed due to the load resulting from the wheel 36, the rail (track) 35 should not come in contact with the sleeper 46, since such a contact would cause damping to be excluded. The rail fastener 82, in particular the clamp-connection, should further be designed in such a way that even if the damping element 10 deforms the rail (track) 35 always remains in contact with the damping element 10, without touching the sleeper 46.

Figures 5.1 to 5.3 illustrate one embodiment of a sleeper 46 from different viewpoints.

Figure 5.1 shows the sleeper 46 in a top view with a rail 35 determining the track width. Below the rail 35, the damping element 10 is embedded in a recess 80 into e.g. the concrete of the sleeper 46. In this arrangement the concrete part of the sleeper 46 forms the armament 88 of the damping element 10. The structure of the armament 88 is illustrated and can be deduced in more detail from the front and side views of Figures 5.2 and 5.3. The armament 88 exhibits a profile, which is typical for sleepers 46 and known in the art. In particular the armament 88 has a middle part 100 between two rail carrying parts. Here, the middle part 100 is narrower than the rail carrying parts 86. The side and front view of figures 5.2 and 5.3 illustrate further details of the sleeper 46, the armament 88, the rail (track) 35 and the fastening means 82.

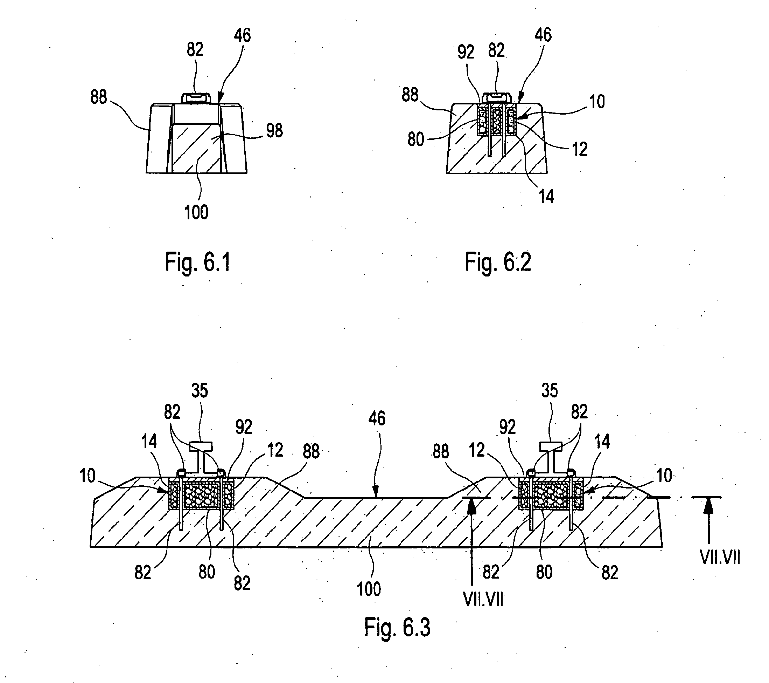

Figures 6.1 to 6.3 illustrate sectional views of the embodiment of the sleeper 46 according to Figure 4. In particular, figure 6.1 and figure 6.2 are cuts through planes VII.IV and VII.V as indicated in figure 5.2, respectively, and figure 6.3 is a longitudinal cut through plane VII.VI as indicated in figure 5.1.

As shown in the sectional front and side views of Figures 6.1 to 6.3, a plate 92 is placed between the rail 35 and the damping element 10. The plate 92 is preferably made of steel and allows uniformly distribute the impinging excitations onto the damping element 10. Furthermore, fastening means 82 are reaching into the concrete structure 88 of the sleeper 46 to fix the rail 35. The damping element 10 is placed in a recess 80 within the concrete armament structure 88 of the sleeper 46.

Furthermore, the damping element 10 exhibits a pressure level p in the container 14 adapted to the specific application. Consequently, the frequency and/or rate of mechanical excitations stemming from a train travelling on the rail 35 is matched with the frequency and/or rate, at which said viscoelastic bulk and/or granular material 12 within the container 14 develops its maximum energy absorption property for the given frequency. This way, the mechanical excitation can be damped and the damping is optimized by adapting the pressure level p of the damping element 10 inside the container 14, accordingly.

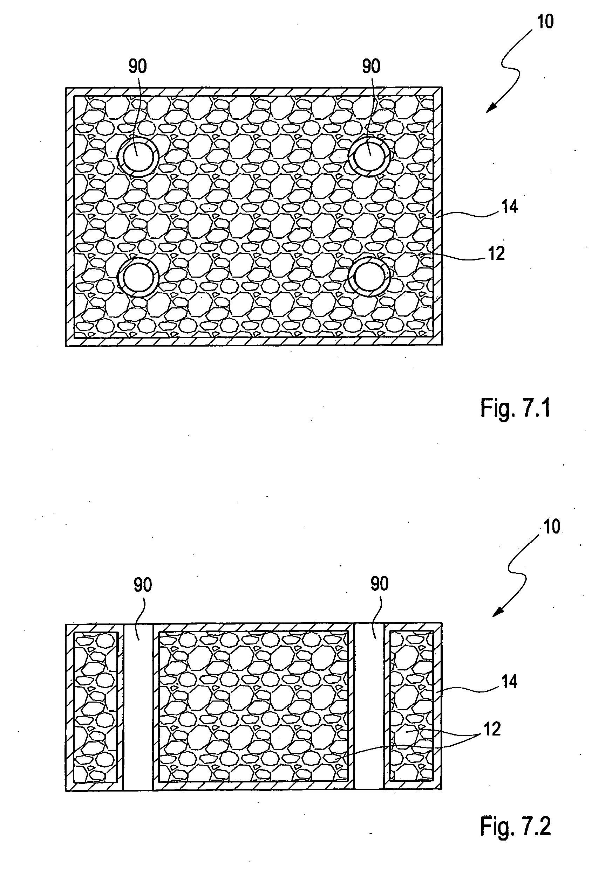

Figures 7.1 and 7.2 illustrate sectional views of an exemplary embodiment of the damping element 10, wherein figure 7.1 shows a cut through plane VII.VII as indicated in figure 6.3 and figure 7.2 shows a cut through plane VII.VI as indicated in figure 5.1.

The damping element 10 as shown in figures 7.1 and 7.2 comprises as described above the container 14, which encapsulates the viscoelastic bulk and/or granular material 12 such that the pressure level p is reached inside the container 14. Furthermore, the damping element 10 comprises holes 90, which aid fixation of the rail 35 on top of the sleeper system 46. The fixation may be realized through any rail fastener 82 known in the art. Particularly suitable are bolted, respectively pre-stressed bolted, connections. With the holes 90, bolts 82 can fix the rail 35 to the armament 88 of the sleeper 46 without influencing the damping effect of the damping element 10.

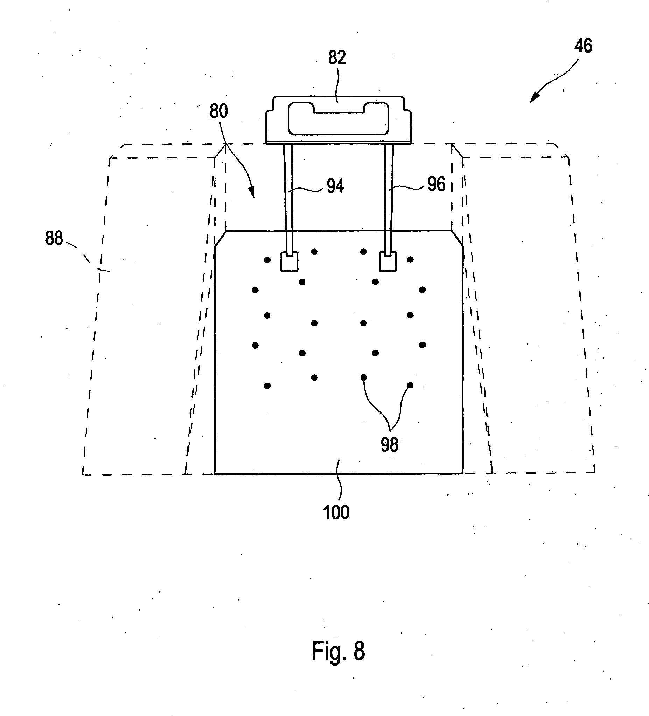

Figure 8 shows another cross-section 98 of the sleeper 46 including the armament 88 forming the recess 80.

Here, the damping element 10 is embedded in the recess 80 and the rail 35 is fixed to the sleeper 46 through fastening means 82, e.g. clamps comprising two fasteners 94 and 96, which, as can be seen from e.g. Figure 5, hold the rail 35 in place along the side of the rail 35. To achieve a stable fixation of the rail the fasteners 94 and 96 are further embedded within the concrete structure 100 of the sleeper 46. In this region the concrete structure 100 is reinforced by metal elements, particularly reinforcing steel bars 98.

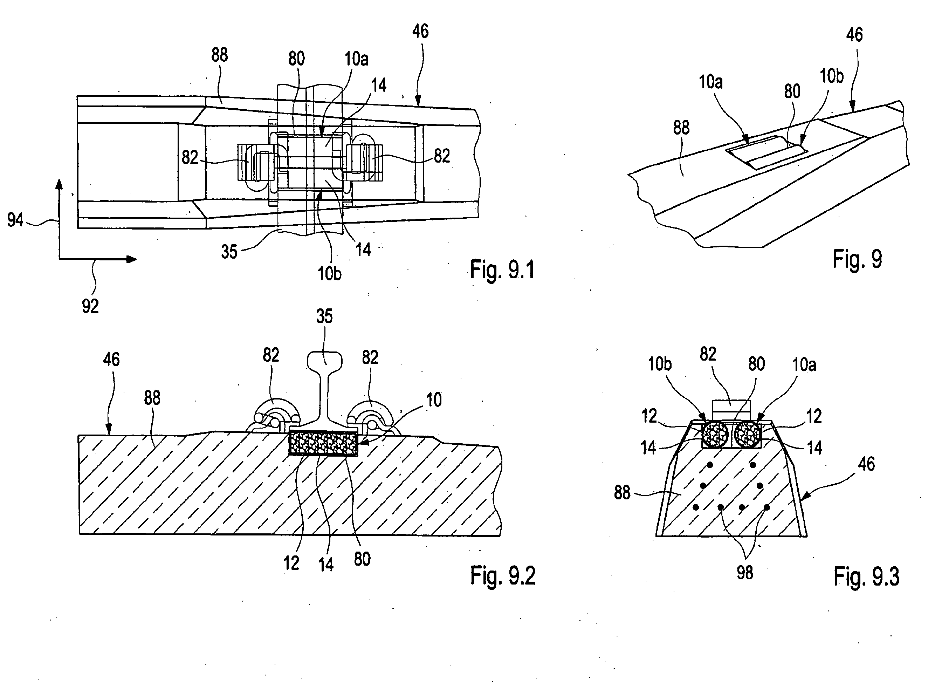

Figure 9 shows a further embodiment of a sleeper 46 including damping elements 10a, 10b for damping structural vibrations and reducing noise in railway structures 34 (shown in Fig.4) in a perspective view.

Here, the supporting structure is a sleeper 46 for supporting the rail 35 (not shown) of the railway system 34 (shown in Fig. 4). The sleeper 46 comprises two sock-like damping elements 10a,b, in which a viscoelastic bulk and/or granular material 12 is embedded. The viscoelastic material 12 can for instance be made of waste rubber tyres or any other recycled rubber and the container 14 can be made of basalt fiber. In particular, the container 14 may be embedded in an armament 88 in order to allow transmission of exciting mechanical loads through the viscoelastic material 12 to the supporting structure 46.

Figure 9.1 shows a top view of the sleeper 46 illustrated in a perspective view in Figure 9. Figures 9.2 and figure 9.3 illustrate a front sectional view and a side sectional view, respectively.

As can be seen from Figure 9 in connection with the different perspectives shown in Figures 9.1 to 9.3, the axis of the sock-like damping elements 10a,b align with the long axis 92 of the sleeper 46. Thus, they are arranged side by side along the short axis 94 of the sleeper 46. The rail 35 therefore runs over the recess 80 across the two damping elements 10a,b and the length of the damping elements 10a,b corresponds at least to the width of the rail 35.

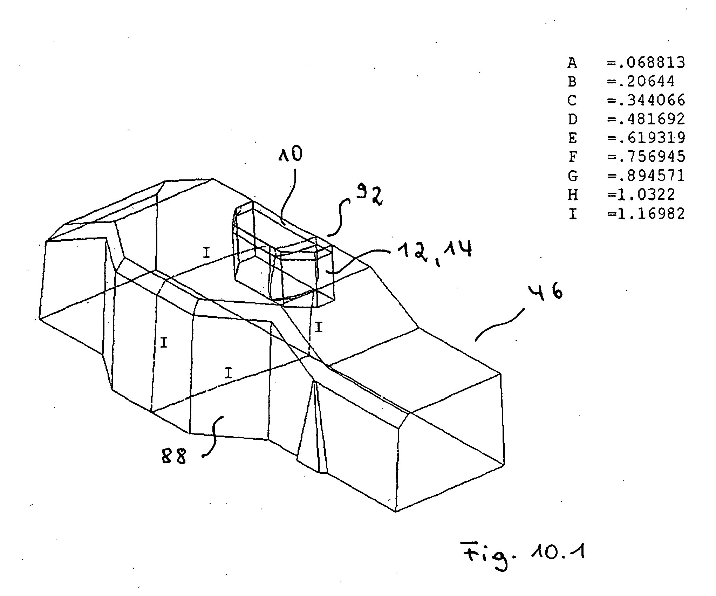

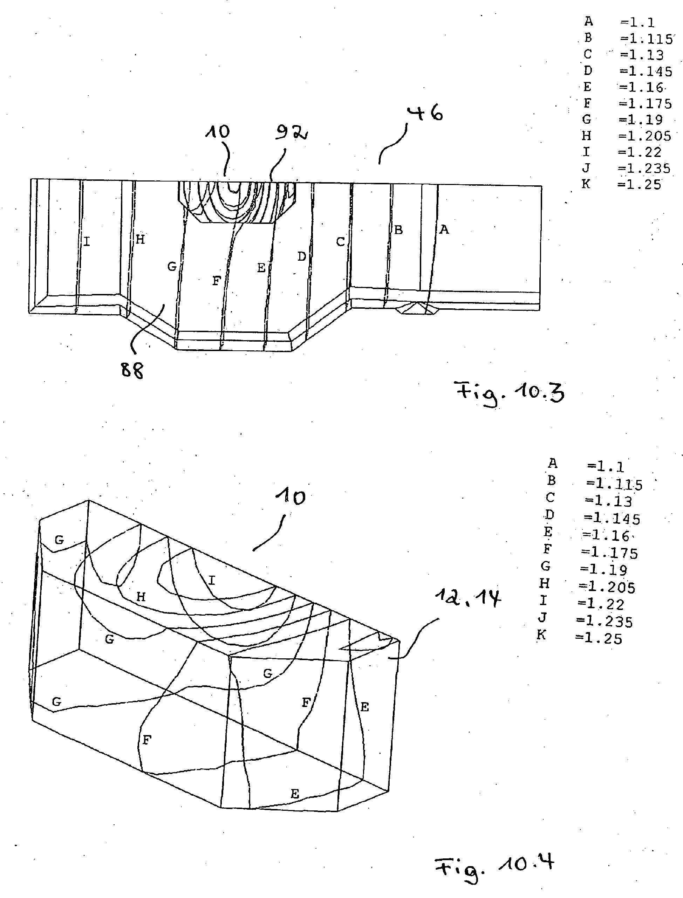

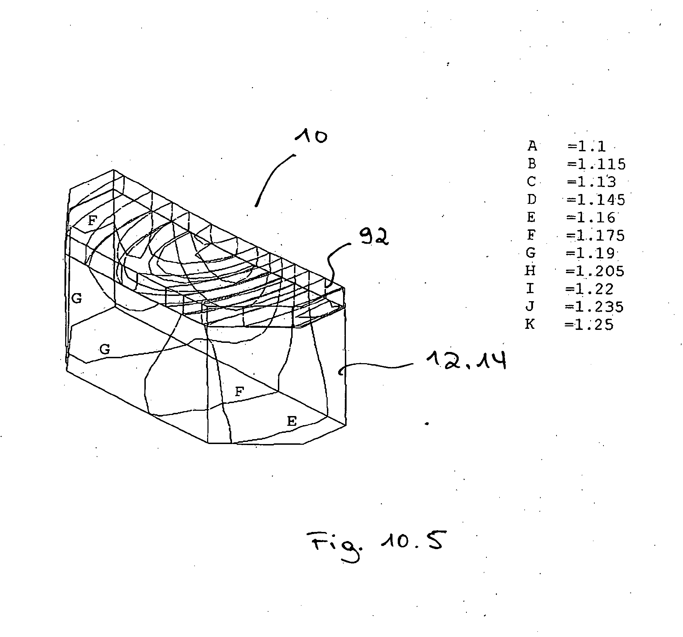

Figures 10.1 to 10.5 illustrate the effect of the proposed sleeper system 46 including a damping element 10. In particular, the schematic illustrations demonstrate deformation distributions for such an arrangement 46 by considering a rail car with 6 axes for a passenger train, speed up to 200 km/h and a loading of the sleeper being about 225kN per wheel (450 kN per axis) when the trains runs over the corresponding sleeper 46.

In Figure 10.1 the sleeper deformation is indicated by the contour lines A to I with the given scale in mm. Typically such a sleeper 46 is supported by an elastic or deformable support, such as gravel or soil. Hence, when a train runs through, vibrations of the whole sleeper system 46 are partly damped by the support. Furthermore, the damping element 10 and the plate 92 absorb vibrations of the rail 35. In fact Figure 10.1 shows that the deformation of the sleeper system 46 bedded on an elastic support are nearly uniform across the short axis 94 (shown on Fig. 9.1) of the system 46.

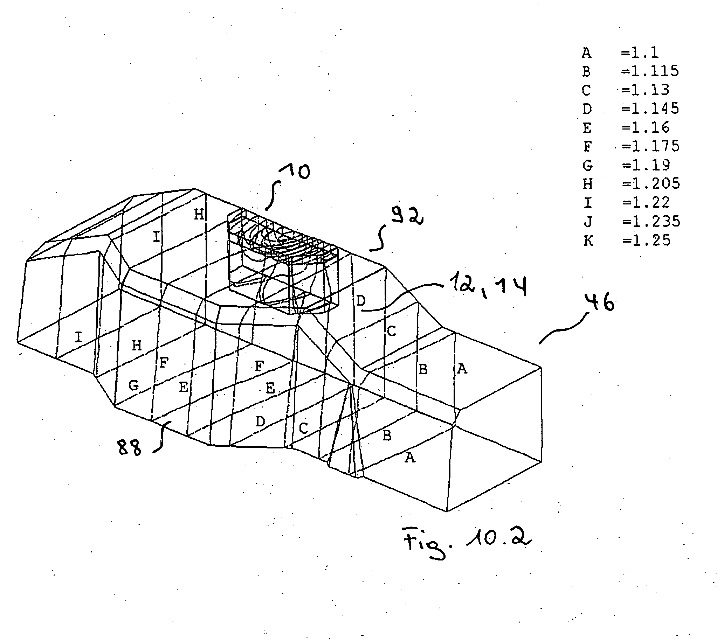

Figures 10.2 to 10.5 illustrate the deformation characteristics of the sleeper system 46 in more detail. As can be seen from the corresponding contour lines the deformation is nearly uniform across the sleeper 46. Thus the sleeper 46 and in particular the damping element 10 provide a sufficient resistance against deformation and a high enough stiffness to carry and damp the load of a train. Furthermore, the plate 92 facilitates a uniform load distribution on the damping element 10 and thus enhances the damping properties of the damping element 10.

As a result the proposed sleeper system 46 including the damping element 10 meets the requirements of having good damping characteristics and at the same time reaching a high dimensional stability even under high loads as well as durability. Therefore, the simple sleeper system proposed here provides an effective and flexible way to damp vibrations in high load applications, as railways.

While the present invention has been described herein in detail in relation to one or more preferred embodiments, it is to be understood that this disclosure is only illustrative and exemplary of the present invention and is made merely for the purpose of providing a full and enabling disclosure of the invention. The foregoing disclosure is not intended to be construed to limit the present invention or otherwise exclude any such other embodiments, adaptations, variations, modifications or equivalent arrangements; the present invention being defined by the claims appended hereto, taking account of the equivalents thereof.

## Claims

1. A rail way sleeper (46) including at least one damping element (10) for absorbing mechanical excitations (43), wherein the at least one damping element (10) is embedded into a recess (80) of the sleeper (46), **characterized in that** the at least one damping element (10) comprises a container (14) encapsulating a viscoelastic material (12), wherein the container (14) is pressurized to a pressure level (p), at which the damping element's (10) frequency and/or rate for absorbing a maximum energy substantially matches a frequency and/or rate of the mechanical excitation (43).

2. Sleeper (46) according to claim 1, wherein said container (14) is pressure-sealed and deformable.

3. Sleeper (46) according to claims 1 to 2, wherein said container (14) is made of a time-independent material.

4. Sleeper (46) according to claims 1 to 3, wherein said container (14) is made of concrete, reinforced concrete, stone, natural rock, metal, a fiber-based material or a fiber-reinforced composite.

5. Sleeper (46) according to claims 1 to 4, wherein said container (14) encapsulating said viscoelastic material (12) is designed to allow transmission of exciting mechanical loads (43) to said viscoelastic material (12).

6. Sleeper (46) according to claims 1 to 5, wherein said viscoelastic material (12) is made of a time-dependent material, preferably rubber and/or thermoplastic material.

7. Sleeper (46) according to claims 1 to 6, wherein the pressure (p) inside the container (14) of said damping element (10) lies between 0.1 and 1000 MPa.

8. Sleeper according to claims 1 to 7, wherein the frequency and/or rate, at which said damping element (10) absorbs a maximum energy, is matched with a frequency and/or rate of the mechanical excitation (43) determined at the position, where the sleeper (46) is to be installed.

9. Sleeper (46) according to claims 1 to 8, wherein said viscoelastic material (12) is made of recycled rubber.

10. Sleeper (46) according to claims 1 to 9, wherein said container (14) is made of glass-, basalt- and/or carbon fiber.

11. Sleeper (46) according to claims 1 to 10, wherein the damping element (10) has a sock-like shape.

12. Sleeper (46) according to claims 1 to 11, wherein one or more damping elements (10) are embedded in the recess.

13. Sleeper (46) according to claims 1 to 12, wherein the damping element (10) is covered by a plate (92).

14. Sleeper (46) according to claims 1 to 13, wherein said damping element (10) is positioned, such that a rail (35) to be fixed on the sleeper (46) is not in contact with an armament (88) of the sleeper (46).

15. Railway structure (34) including at least one sleeper (46) according to claims 1 to 14 supporting at least one rail (35).

16. Railway structure (34) according to claim 15, wherein said damping element (10) is positioned underneath said rail (35) supported by the sleeper (46) such that the rail (35) is not in contact with an armament (88) of the sleeper (46).

## Patentansprüche

1. Bahnschwelle (46), die zumindest ein Dämpfungselement (10) zum Absorbieren von mechanischen Anregungen (43) umfasst, wobei das mindestens eine Dämpfungselement (10) in eine Ausnehmung (80) der Bahnschwelle eingebettet (46) wird, **dadurch gekennzeichnet, dass** das mindestens eine Dämpfungselement (10) einen Behälter (14) zur Verkapselung eines viskoelastischen Materials (12) umfasst, wobei der Behälter (14) auf ein Druckniveau (p) unter Druck gesetzt wird, bei dem die Frequenz und / oder die Rate des Dämpfungselementes (10) zum Absorbieren einer maximalen Energie im Wesentlichen einer Frequenz und / oder einer Rate der mechanischen Anregung (43) entspricht.

2. Bahnschwelle (46) nach Anspruch 1, **dadurch gekennzeichnet, dass** der Behälter (14) druckdicht und verformbar ist.

3. Bahnschwelle (46) nach einem der Ansprüche 1 bis 2, **dadurch gekennzeichnet, dass** der Behälter (14) aus einem zeitunabhängigen Material hergestellt ist.

4. Bahnschwelle (46) nach einem der Ansprüche 1 bis 3, **dadurch gekennzeichnet, dass** der Behälter (14) aus Beton, Stahlbeton, Stein, Naturgestein, Metall, einem Faserwerkstoff oder einem faserverstärkten Verbundwerkstoff hergestellt ist.

5. Bahnschwelle (46) nach einem der Ansprüche 1 bis 4, **dadurch gekennzeichnet, dass** der Behälter (14) zur Verkapselung des viskoelastischen Materials (12) zum Ermöglichen der Übertragung von anregenden mechanischen Belastungen (43) zu dem viskoelastischen Material (12) ausgelegt ist.

6. Bahnschwelle (46) nach einem der Ansprüche 1 bis 5, **dadurch gekennzeichnet, dass** das viskoelastische Material (12) aus einem zeitabhängigen Material hergestellt ist, bevorzugt aus Gummi und / oder thermoplastischem Material.

7. Bahnschwelle (46) nach einem der Ansprüche 1 bis 6, **dadurch gekennzeichnet, dass** der Druck (p) innerhalb des Behälters (14) des Dämpfungselementes (10) zwischen 0,1 und 1000 MPa liegt.

8. Bahnschwelle (46) nach einem der Ansprüche 1 bis 7, **dadurch gekennzeichnet, dass** die Frequenz und / oder die Rate, bei der das Dämpfungselement (10) eine maximale Energie absorbiert, einer Frequenz und / oder einer Rate der mechanischen Anregung (43), die an der Installationsstelle der Bahnschwelle (46) ermittelt wird, entspricht.

9. Bahnschwelle (46) nach einem der Ansprüche 1 bis 8, **dadurch gekennzeichnet, dass** das viskoelastische Material (12) aus recyceltem Gummi hergestellt ist.

10. Bahnschwelle (46) nach einem der Ansprüche 1 bis 9, **dadurch gekennzeichnet, dass** der Behälter (14) aus Glas-, Basalt- und / oder Kohlefaser hergestellt ist.

11. Bahnschwelle (46) nach einem der Ansprüche 1 bis 10, **dadurch gekennzeichnet, dass** das Dämpfungselement (10) eine sockenähnliche Form aufweist.

12. Bahnschwelle (46) nach einem der Ansprüche 1 bis 11, **dadurch gekennzeichnet, dass** ein oder mehrere Dämpfungselemente (10) in die Ausnehmung (80) eingebettet sind.

13. Bahnschwelle (46) nach einem der Ansprüche 1 bis 12, **dadurch gekennzeichnet, dass** das Dämpfungselement (10) durch eine Platte (92) bedeckt wird.

14. Bahnschwelle (46) nach einem der Ansprüche 1 bis 13, **dadurch gekennzeichnet, dass** das Dämpfungselement (10) so angeordnet ist, dass eine Schiene (35), die auf die Bahnschwelle (46) befestigt wird, nicht mit einer Armierung (88) der Bahnschwelle (46) in Berührung kommt.

15. Bahnstruktur (34), die zumindest eine Bahnschwelle (46) nach einem der Ansprüche 1 bis 14 umfasst, trägt zumindest eine Schiene (35).

16. Bahnstruktur (34) nach Anspruch 15, **dadurch gekennzeichnet, dass** das Dämpfungselement (10) unter die Schiene (35), die durch die Bahnschwelle (46) ohne Kontakt mit einer Armierung (88) der Bahnschwelle (46) abgestützt wird, gelegt ist.

## Revendications

1. Traverse de chemin de fer (46) comprenant au moins un élément d'amortissement (10) pour absorber les excitations mécaniques (43), l'au moins un élément d'amortissement (10) étant logé dans une cavité (80) de la traverse (46), **caractérisée en ce que** l'au moins un élément d'amortissement (10) comprend un contenant (14) renfermant un matériau viscoélastique (12), le contenant (14) étant sous pression à un niveau de pression (p), auquel la fréquence et/ou le rythme de l'élément d'amortissement (10) pour l'absorption d'une énergie maximale correspondent essentiellement à une fréquence et/ou un rythme de l'excitation mécanique (43).

2. Traverse (46) selon la revendication 1, dans laquelle ledit contenant (14) est étanche et déformable.

3. Traverse (46) selon les revendications 1 et 2, dans laquelle ledit contenant (14) est constitué d'un matériau indépendant du temps.

4. Traverse (46) selon les revendications 1 à 3, dans laquelle ledit contenant (14) est constitué de béton, de béton armé, de pierre, de roche naturelle, de métal, d'un matériau à base de fibres ou d'un composite renforcé par des fibres.

5. Traverse (46) selon les revendications 1 à 4, dans laquelle ledit contenant (14) renfermant ledit matériau viscoélastique (12) est conçu pour permettre la transmission de charges mécaniques d'excitation (43) audit matériau viscoélastique (12).

6. Traverse (46) selon les revendications 1 à 5, dans laquelle ledit matériau viscoélastique (12) est constitué d'un matériau dépendant du temps, de préférence de caoutchouc et/ou d'un matériau thermoplastique.

7. Traverse (46) selon les revendications 1 à 6, dans laquelle la pression (p) à l'intérieur du contenant (14) dudit élément d'amortissement (10) se situe entre 0,1 et 1000 MPa.

8. Traverse (46) selon les revendications 1 à 7, dans laquelle il est fait en sorte que la fréquence et/ou le rythme, auxquels ledit élément d'amortissement (10) absorbe une énergie maximale, correspondent à une fréquence et/ou un rythme de l'excitation mécanique (43) déterminés à la position où la traverse (46) doit être installée.

9. Traverse (46) selon les revendications 1 à 8, dans laquelle ledit matériau viscoélastique (12) est constitué de caoutchouc recyclé.

10. Traverse (46) selon les revendications 1 à 9, dans laquelle ledit contenant (14) est constitué de fibre de verre, de basalt et/ou de carbone.

11. Traverse (46) selon les revendications 1 à 10, dans laquelle l'élément d'amortissement (10) a une forme ressemblant à une chaussette.

12. Traverse (46) selon les revendications 1 à 11, dans laquelle un ou plusieurs éléments d'amortissement (10) sont logés dans la cavité.

13. Traverse (46) selon les revendications 1 à 12, dans laquelle l'élément d'amortissement (10) est recouvert par une plaque (92).

14. Traverse selon les revendications 1 à 13, dans laquelle ledit élément d'amortissement (10) est positionné de telle sorte qu'un rail (35) à fixer sur la traverse (46) ne se trouve pas en contact avec un blochet (88) de la traverse (46).

15. Structure de chemin de fer (34) comprenant au moins une traverse (46) selon les revendications 1 à 14 supportant au moins un rail (35).

16. Structure de chemin de fer (34) selon la revendication 15, dans laquelle ledit élément d'amortissement (10) est positionné sous ledit rail (35) supporté par la traverse (46) de telle sorte que le rail (35) ne se trouve pas en contact avec un blochet (88) de la traverse (46).
